# EUROPÄISCHE PATENTSCHRIFT

(11) **EP 2 764 270 B1**
(45) Veröffentlichungstag und Bekanntmachung des Hinweises auf die Patenterteilung: **30.12.2015**
(21) Anmeldenummer: 12769423.0
(22) Anmeldetag: 04.10.2012
(51) Int. Cl.: F16D 3/74

(54) **AUSGLEICHSKUPPLUNG ZUR ÜBERTRAGUNG VON DREHMOMENTEN**
COMPENSATION CLUTCH TO TRANSMIT TORQUE
ACCOUPLEMENT DE COMPENSATION POUR TRANSMISSION DE COUPLE

(30) Priorität: 07.10.2011 DE 102011115095
(43) Veröffentlichungstag der Anmeldung: 13.08.2014
(73) Patentinhaber: Ringfeder Power-Transmission GmbH, 64823 Gross-Umstadt (DE)
(72) Erfinder: ENGLERT, Thomas, 63762 Großostheim (DE)
(74) Vertreter: Lorenz, Bernd Ingo Thaddeus
(86) Internationale Anmeldenummer: PCT/EP2012/069619
(87) Internationale Veröffentlichungsnummer: WO 2013/050469

(56) Entgegenhaltungen:
- EP-A2- 1 157 785
- DE-A1- 3 320 605
- DE-C1- 19 939 510

## Beschreibung

Die Erfindung betrifft eine Ausgleichskupplung zur Übertragung von Drehmomenten mit einem sich in eine Längsrichtung erstreckenden, hülsenförmigen Grundkörper, welcher mehrere um den Umfang sowie entlang der Längsrichtung verteilte Querschlitze aufweist, wobei die Querschlitze sich jeweils in radialer Richtung von einer Außenfläche zu einer Innenfläche des hülsenförmigen Grundkörpers erstrecken und jeweils mit einem Elastomer ausgefüllt. Die Ausgleichskupplung kann beispielsweise dazu vorgesehen sein, Fluchtungsfehler von miteinander zu verbindenden Wellen oder zwischen einer Welle und einem Werkzeug auszugleichen, da die Ausgleichskupplung durch die Schlitze in einem gewissen Maß elastisch ist, wobei durch die Konstruktion mit einem durchgehenden Grundkörper auch große Drehmomente übertragen werden können. Gegenüber einem starren Rohr kann die Ausgleichskupplung auch durch eine Torsion Drehmomentspitzen bzw. plötzliche Drehmomentschwankungen abmildern.

Ausgleichskupplungen mit einem hülsenförmigen Grundkörper und Querschlitzen sind aus der FR 2 271 452 sowie der EP 0 318 669 A1 (Fig. 9) bekannt. In Querschnittsebenen sind jeweils mehrere Querschlitze gebildet, wobei die Querschlitze von aufeinanderfolgenden Querschnittsebenen gegeneinander bei drei Schlitzen pro Ebene um 60 ° und bei vier Schlitzen um 45 ° versetzt sind. Durch diesen Versatz wird erreicht, dass die Ausgleichskupplung bei einer Drehung gleichmäßig verformt werden kann. Dadurch, dass ein massiver, hülsenförmiger Grundkörper eingesetzt wird, ergibt sich einerseits eine besonders einfache Herstellung und andererseits die Möglichkeit zur Übertragung großer Drehmomente.

Eine weitere Ausgleichskupplung mit einem hülsenförmigen Grundkörper und Querschlitzen ist aus der DE 199 39 510 C1 bekannt, wobei der Kupplungskörper von einem elastomeren Werkstoff mit Dämpfungseigenschaften umgeben ist. Dadurch kann erreicht werden, dass Vibrationen und Schwingungen bei einer Drehmomentübertragung über die Kupplung reduziert werden. Der elastomere Werkstoff wird nachträglich als Schlauch auf die Ausgleichskupplung aufgezogen. So kann beispielsweise als elastomeres Material ein einfacher Schrumpfschlauch vorgesehen sein. Das nachträgliche Aufziehen des elastomeren Materials kann mit einfachen Mitteln erfolgen, wobei der geschlitzte, einstückig aus Metall gebildete Grundkörper in seiner Konstruktion unverändert ist. Bei der bekannten Ausgestaltung ergibt sich der Nachteil, dass der an der Außenseite aufliegende Schlauch aus elastomerem Material sich von dem Grundkörper lösen kann und in radialer Richtung erheblich über dem Grundkörper vorsteht. Es bildet sich eine Kante, an der bei der Montage und Handhabung ein Verkanten möglich ist. Des Weiteren sind die Dämpfungseigenschaften noch verbesserungsbedürftig.

Eine Ausgleichskupplung gemäß dem Oberbegriff des Patentanspruches 1 ist aus DE 33 20 605 A1 bekannt. Die Ausgleichskupplung weist zwischen zwei Endstücken einen Faserverbund auf, wobei die einzelnen Fasern sich an Stegen zwischen den Schlitzen kreuzen und damit zu einer hohen Stabilität des gebildeten Faserverbundes beitragen. Der mit den Querschlitzen versehene Faserverbundabschnitt ist von außen auf hülsenförmige Endabschnitte aufgesetzt, so dass dieser Bereich einen größeren Außendurchmesser aufweist. Die gebildeten Querschlitze sind durch Elastomer ausgefüllt. Gerade der Übergang zu dem Faserverbundabschnitt mit der dort vorhandenen Kante kann in der Praxis eine Schwachstelle darstellen. Beispielsweise kann der Faserverbundabschnitt bei der Montage dort anschlagen. Es besteht des Weiteren auch die Gefahr einer Ansammlung von Schmutz.

Aus EP 1 157 785 A1 ist eine Vorrichtung zum Verbinden eines Werkzeuges mit einem Antrieb bekannt, welche eine Federscheibenkupplung umfasst. Dieses Kupplungselement weist hintereinander eine Vielzahl von Federscheiben mit einer axialen Bohrung auf, die jeweils mit den benachbarten Federscheiben durch dünne Stege verbunden sind. Durch einen Versatz der in einer Längsrichtung aufeinander folgenden Stege um 90° werden gleichmäßige elastische Eigenschaften erreicht. Der Zwischenraum zwischen benachbarten Scheiben der Federscheibenkupplung kann mit Elastomer ausgespritzt sein.

Vor diesem Hintergrund liegt der vorliegenden Erfindung die Aufgabe zugrunde, eine Ausgleichskupplung zur Übertragung von Drehmomenten anzugeben, welche verbesserte Funktionseigenschaften aufweist.

Gegenstand der Erfindung und Lösung der Aufgabe sind eine Ausgleichskupplung gemäß Patentanspruch 1 sowie ein Verfahren zur Herstellung einer Ausgleichspatentanspruch 12.

Erfindungsgemäß ist gegenüber eine herkömmlichen Ausgleichskupplung auch der Grundkörper verändert und an die Aufnahme des Elastomers angepasst. Der Grundkörper weist in Längsrichtung hintereinander zumindest einen mit Querschlitzen versehenen Bereich zwischen zwei ungeschlitzten Bereichen auf, wobei erfindungsgemäß der mit den Querschlitzen versehene Bereich einen größeren Innendurchmesser und/oder einen kleineren Außendurchmesser als die ungeschlitzten Bereiche aufweist.

Der mit den Querschlitzen versehen Bereich springt damit gegenüber den ungeschlitzten Bereichen an der Innenseite bzw. der Außenseite zurück. Dadurch ist es möglich, dass dieser zurückspringende Bereich derart mit Elastomer versehen wird, dass in dem mit Querschlitzen versehene Bereich der Grundkörper zusammen mit dem Elastomer den gleichen Innendurchmesser und Außendurchmesser wie die angrenzenden ungeschlitzten Bereiche aufweist. Trotz der Anordnung des Elastomers kann also eine zylindrische, stufenlose Innenfläche und Außenfläche der Ausgleichskupplung erreicht werden. Kanten, die bei dem Betrieb oder der Montage mögliche Schwachstellen darstellen, werden dadurch vermieden. Das gegenüber den ungeschlitzten Bereichen weder an der Innenseite noch an der Außenseite vorstehende Elastomer ist optimal geschützt. Eine stufenfreie Ausgestaltung ist auch bei der Montage vorteilhaft, beispielsweise wenn die Ausgleichskupplung durch eine Öffnung geschoben wird oder wenn Wellen, Zuleitungen oder dergleichen innen durch die Ausgleichskupplung hindurchgeschoben werden.

Ausgehend von einer Ausgleichskupplung mit den eingangs beschriebenen Merkmalen wird die Aufgabe erfindungsgemäß dadurch gelöst, dass die in dem hülsenförmigen Grundkörper gebildeten Querschlitze jeweils mit einem Elastomer ausgefüllt sind. Durch die beschriebenen Maßnahmen kann eine sehr effektive Dämpfung von Schwingungen und Vibrationen erfolgen, ohne dass die vorteilhaften Funktionseigenschaften der Ausgleichskupplung beeinträchtigt sind. Im Gegensatz zu dem nachträglichen Aufziehen eines schlauchförmigen Elastomerkörpers, ergibt sich bei der Herstellung ein deutlich erhöhter Fertigungsaufwand. So muss bei der Herstellung eine elastomere Grundsubstanz bereit gestellt werden, die zunächst fließfähig ist, um in die Querschlitze eingebracht zu werden und sodann aushärtet. Geeignet sind beispielsweise bei der Herstellung aushärtende, insbesondere vulkanisierende Elastomere oder je nach Anwendungsfall auch thermoplastische Elastomere, wenn sichergestellt werden kann, dass die Erweichungstemperatur beim späteren Betrieb der Ausgleichskupplung nicht überschritten wird. Grundsätzlich wäre es auch denkbar, genau auf die Größe der Querschlitze angepasste Zuschnitte eines Elastomermaterials einzusetzen, was aber auch mit einem erheblichen Fertigungsaufwand verbunden ist.

Der vorliegenden Erfindung liegt die Erkenntnis zugrunde, dass durch den Mehraufwand bei der Herstellung die Dämpfungseigenschaften überraschenderweise sehr deutlich verbessert werden können. Es verbleiben durch die Ausfüllung der Querschlitze keine Freiräume mehr, die in Schwingung versetzt werden können. Insbesondere erfolgt insgesamt eine sehr großflächige Abstützung über das elastomere Material, sodass Schwingungs- und Vibrationsenergie sehr effizient abgebaut werden kann.

Das Elastomer ist vorzugsweise relativ hart und weist eine Härte zwischen 70 Shore A und 95 Shore A auf. Der Einsatz eines solchen Elastomers ist vorteilhaft, weil auf die Ausgleichskupplung durch die massive Konstruktion sehr große Kräfte ausgeübt werden können, sodass dann noch eine ausreichend steife Abstützung zwischen den Schlitzen zur effizienten Schwingungs- und Vibrationsminderung zweckmäßig ist.

Geeignet als Elastomer sind insbesondere Polyurethan-Elastomere. Ein bevorzugtes Material ist beispielsweise der von der Bayer AG unter dem Markennamen **Vulkollan** vertriebene Elastomer-Kunststoff auf Polyurethan-Basis. Insbesondere ist es von Vorteil, wenn das eingesetzte Elastomer wie auch **Vulkollan** mit einer Härte zwischen 70 Shore A und 95 Shore A nachträglich noch spanabhebend bearbeitet werden kann.

Um das Elastomer unter allen Umständen sicher in den Querschlitzen halten zu können, ist es von Vorteil, wenn das Elastomer an der Innenseite und/oder der Außenseite des Grundkörpers aus den Schlitzen vorsteht und sich dort in axialer Richtung über den jeweils zugeordneten Schlitz hinaus erstreckt. Durch eine solche Ausgestaltung wird zwischen dem Elastomer und dem jeweils zugeordneten Schlitz eine formschlüssige Verbindung erreicht, wodurch das Elastomer fixiert ist. So ist es denkbar, dass das Elastomer bei jedem Schlitz eine endseitige Verdickung aufweist, sodass dauerhaft eine verlustsichere Anordnung gewährleistet ist.

Darüber hinaus ist es möglich, dass an der Innenseite und/oder der Außenseite des Grundkörpers eine mehrere Schlitze abdeckende Schicht aus Elastomer vorhanden ist, welche mit dem Elastomer in den Schlitzen einen zusammenhängenden Elastomerkörper bildet. Durch einen zusammenhängenden Elastomerkörper für mehrere Schlitze wird unter allen Umständen sichergestellt, dass sich das Elastomer auch unter extremen Bedingungen nicht von dem Grundkörper lösen kann. Besonders bevorzugt ist eine Ausgestaltung, bei der der Elastomerkörper die zugeordneten Schlitze an der Innenseite und der Außenseite abdeckt, sodass eine besonders innige und vollständige Verbindung zwischen den Querschlitzen und dem elastomeren Material erreicht wird. Die Querschlitze sind des Weiteren durch das Elastomer sowohl an der Innenseite als auch an der Außenseite gegen Verschmutzungen, Korrosion oder dergleichen geschützt und für einen Benutzer nicht sichtbar.

Die Ausgleichskupplung weist üblicherweise in axialer Richtung gesehen endseitige Anschlussabschnitte auf, die ungeschlitzt sind. Der mit den Querschlitzen versehene Bereich ist dann zwischen diesen endseitigen Anschlussabschnitten. Wenn die Ausgleichskupplung eine erhöhte Länge aufweist, können zwischen den Anschlussabschnitten auch mehrere mit Querschlitzen versehene Bereiche vorgesehen sein, die durch ungeschlitzte Zwischenabschnitte voneinander getrennt sind.

Die Herstellung der Ausgleichskupplung erfolgt üblicherweise ausgehend von einem dickwandigen Rohr oder auch ausgehend von einem stabförmigen Vollmaterial, welches zunächst durch die Erzeugung einer innen liegenden Öffnung zu einem Rohrabschnitt umgeformt wird. In beiden Fällen ist der Grundkörper aus einem zusammenhängenden Metallstück und nicht aus einer Vielzahl zusammengesetzter oder nachträglich miteinander verbundener Einzelteile gebildet, wodurch sich eine besonders hohe Bruchsicherheit sowie eine einfache Herstellung ergibt.

Die Querschlitze können im Rahmen der Erfindung verschiedene Formen aufweisen. So ist es möglich, dass die Querschlitze die Form von einfachen Ringsegmenten aufweisen, welche an der Innenseite und der Außenseite des Grundkörpers den gleichen Winkelbereich überstreichen. Nachteilig ist jedoch, dass die Herstellung solcher Querschlitze vergleichsweise aufwendig ist, wobei auch der zwischen den Schlitzen verbleibende Steg nach innen schmaler wird. Besonders bevorzugt ist eine Ausgestaltung, bei der die Querschlitze kreisbogenförmige Einschnitte sind. Kreisbogenförmige Einschnitte können besonders einfach hergestellt werden. Kreisbogenförmige Einschnitte sind nicht nur an ihrer Außenseite länger als an ihrer Innenseite, sondern überspannen auch an der Außenseite einen größeren Winkelbereich als an der Innenseite. Zwischen den Schlitzen können so Stege mit einer in radialer Richtung in etwa gleichbleibenden Breite gebildet werden, was im Hinblick auf die Funktion der Ausgleichskupplung vorteilhaft ist.

Um eine gleichmäßige Verformung der Ausgleichskupplung bei der Übertragung von Drehmomenten zu ermöglichen, sind üblicherweise mehrere Querschnittsebenen mit jeweils zumindest zwei Querschlitzen vorhanden, wobei die Querschlitze einer ersten Gruppe von Querschnittsebenen gegenüber den Querschlitzen einer zweiten Gruppe von Querschnittsebenen in Umfangsrichtung gesehen versetzt angeordnet sind. Besonders bevorzugt ist eine Ausgestaltung, bei der die Querschnittsebenen jeweils drei gleichmäßig um den Umfang verteilten Schlitze mit einer Teilung von 120° aufweisen, wobei die Querschlitze der ersten Gruppe gegenüber den Querschlitzen der zweiten Gruppe in Umfangsrichtung um 60 ° versetzt sind.

Bei einer gattungsgemäßen Ausgleichskupplung, auf welche sich die vorliegende Erfindung bezieht, beträgt die Breite der Querschlitze üblicherweise zwischen 1 mm und 5 mm. Die Breite ist so zu wählen, dass die Ausgleichskupplung einerseits stabil genug ist, um die zu erwartenden Drehmomente zu übertragen und andererseits elastisch genug ist, um im ausreichenden Maß verformt zu werden. Im Rahmen der Erfindung ist dabei noch zu berücksichtigen, dass die gesamte Ausgleichskupplung durch die Anordnung des Elastomers in den Querschlitzen in einem gewissen Maß steifer wird, weshalb bei ansonsten ähnlichen Spezifikationen gegebenenfalls die Breite der Querschlitze anzupassen ist.

Üblicherweise weist die Ausgleichskupplung zumindest zwölf Schlitze auf, wobei durch eine entsprechende Verlängerungen der Ausgleichskupplung die Anzahl der Querschlitze auch beliebig erhöht werden kann. Die Wandstärke der Ausgleichskupplung kann beispielsweise zwischen 10 mm und 50 mm liegen. Sofern gemäß einer bevorzugten Ausgestaltung der Erfindung der mit Querschlitzen versehene Bereich bzw. die mit Querschlitzen versehenden Bereiche an der Innenseite und/oder der Außenseite eine nutförmige Vertiefung gegenüber den angrenzenden ungeschlitzten Bereichen aufweist, so muss diese nutförmige Vertiefung tief genug sein, um eine geschlossene, ausreichend feste

Elastomerschicht aufnehmen zu können. Die Nuttiefe beträgt deshalb vorzugsweise zumindest 1 mm.

Gegenstand der Erfindung ist auch ein Verfahren zur Herstellung der zuvor beschriebenen Ausgleichskupplung, wobei ein Rohrabschnitt zugeführt wird, wobei in den Rohrabschnitt zur Erzeugung des mehrfach geschlitzten Grundkörpers die Querschlitze eingebracht werden, wobei an den Rohrenden Anschlussabschnitte erzeugt werden und wobei die Querschlitze mit einem Elastomer ausgefüllt werden. Bei der Herstellung wird auch an der Innenseite und/oder der Außenseite im Bereich mehrerer Querschlitze eine Ringnut gebildet, die nachfolgend zusammen mit den Querschlitzen mit dem Elastomer ausgefüllt wird.

Die Erfindung wird im Folgenden anhand einer lediglich ein Ausführungsbeispiel darstellenden Zeichnung erläutert. Es zeigen:
- Fig. 1: ein Grundkörper einer Ausgleichskupplung in einer perspektivischen Ansicht,
- Fig. 2: einen Längsschnitt durch den Grundkörper gemäß der Fig. 1,
- Fig. 3: einen Schnitt entlang der Linie A-A der Fig. 2,
- Fig. 4: eine erfindungsgemäße Ausgestaltung der Ausgleichskupplung mit dem Grundkörper gemäß der Fig. 2 und mit einem Elastomer.

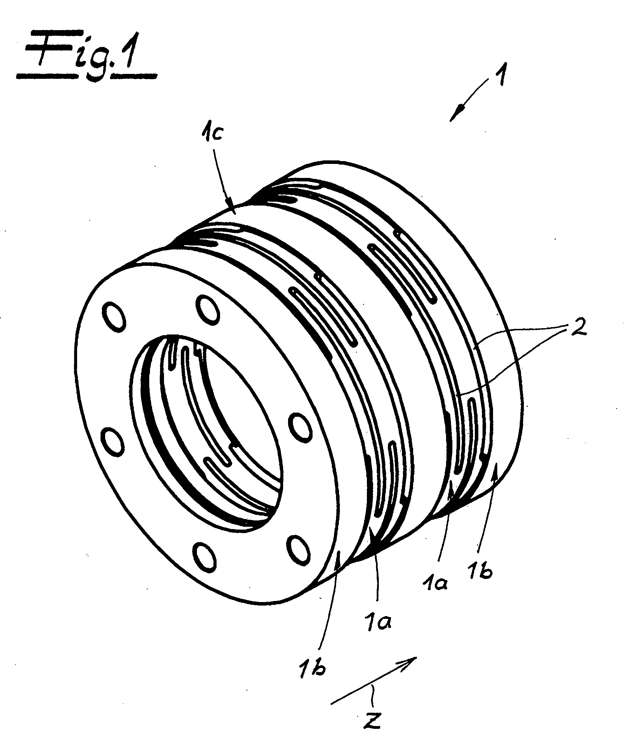

Die Fig. 1 zeigt lediglich den aus einem zusammenhängenden, metallischen Rohrabschnitt gefertigten Grundkörper 1 der erfindungsgemäßen Ausgleichskupplung. Der Grundkörper 1 weist in an sich bekannter Weise eine Vielzahl von Querschlitzen 2 auf, die entlang der Längsrichtung z sowie dem Umfang verteilt angeordnet sind.

Bereits aus der Fig. 1 ist zu erkennen, dass die Querschlitze 2 sich von einer Außenfläche zu einer Innenfläche des hülsenförmigen Grundkörpers 1 erstrecken. Durch die Querschlitze 2 wird erreicht, dass die Ausgleichskupplung bei miteinander zu verbindenden Wellen, bei der Verbindung einer Welle mit einem Werkzeug oder dergleichen Fluchtungsfehler in einem gewissen Maß ausgleichen kann. Des Weiteren können durch eine Torsion des Grundkörpers auch Schläge in Form von Drehmomentspitzen abgemildert werden. Da der Grundkörper aber aus einem einstückigen Metallteil gebildet ist, kann eine sehr hohe Stabilität und Langlebigkeit erreicht werden.

Der Grundkörper 1 weist üblicherweise zumindest einen mit Querschlitzen 2 versehenen Bereich 1 a zwischen zwei endseitigen Anschlussabschnitten 1 b auf. In dem Ausführungsbeispiel sind zwei mit Querschlitzen 2 versehene Bereiche 1 a vorgesehen, die durch einen ungeschlitzten Zwischenabschnitt 1 c getrennt sind.

Bereits in der Fig. 1 ist zu erkennen, dass die mit Querschlitzen 2 versehenen Bereiche 1 a gegenüber den angrenzenden Abschnitten 1 b, 1 c leicht zurückspringen.

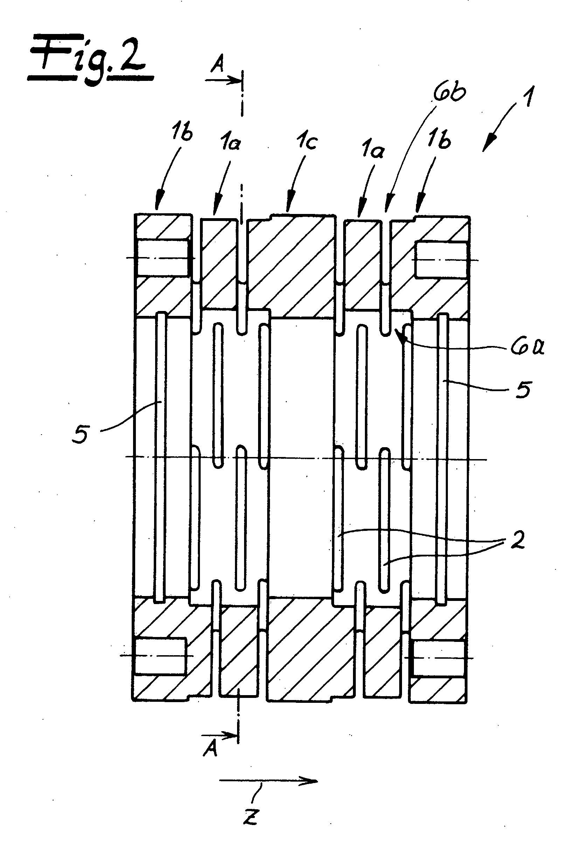

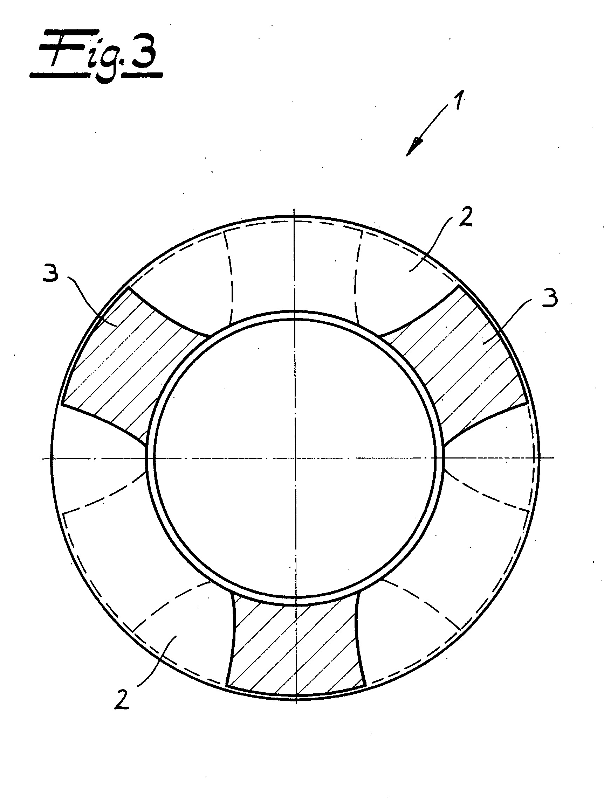

Einer vergleichenden Betrachtung der Figuren 1 und 2 ist zu entnehmen, dass die mit Querschlitzen 2 versehenen Bereiche 1 a jeweils vier Querschnittsebenen mit jeweils drei Querschlitzen 2 aufweisen. Die Fig. 3 zeigt den Grundkörper 1 in einer dieser Querschnittsebenen, wobei zu erkennen ist, dass die Querschlitze 2 kreisbogenförmige Einschnitte sind. Die Querschlitze 2 können also auf besonders einfache Weise mit einer Scheibe eingeschnitten werden.

Durch diese Form der Querschlitze 2 können zwischen den Querschlitzen 2 Stege 3 gebildet werden, die in radialer Richtung eine in etwa gleich bleibende Breite aufweisen.

In der Fig. 3 ist des Weiteren die in Längsrichtung Z folgende Querschnittsebene mit ihren Querschlitzen 2 angedeutet. Es ist zu erkennen, dass die Querschlitze 2 der aufeinanderfolgenden Querschnittsebenen genau um 60° gegeneinander versetzt sind, sodass die Querschlitze 2 der einen Querschnittsebene im Bereich der Stege 3 der benachbarten Querschnittsebene liegen.

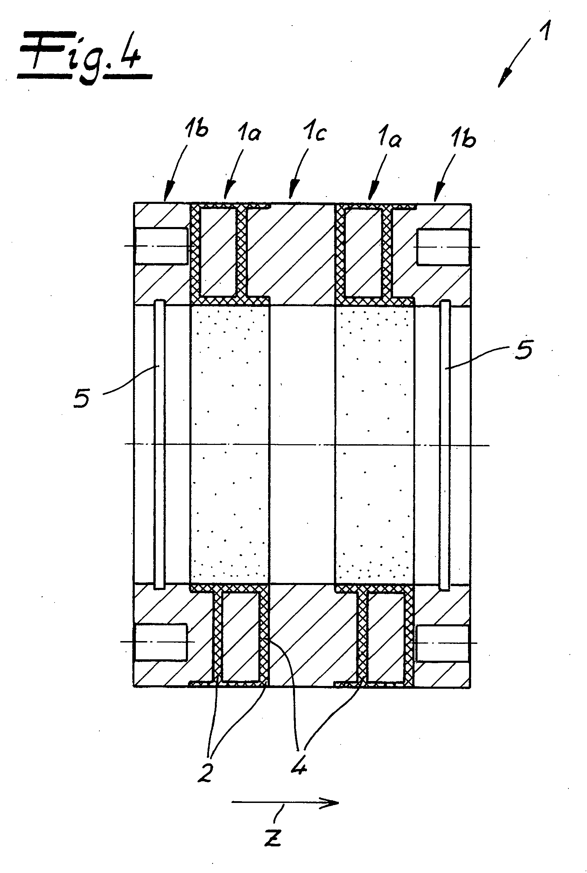

Die Fig. 4 zeigt schließlich die vollständige Ausgleichskupplung, bei der die Querschlitze 2 mit Elastomer 4 ausgefüllt sind. Gemäß der besonders bevorzugten dargestellten Ausgestaltung erstreckt sich das Elastomer 4 auch an der Innenseite und der Außenseite des Grundkörpers 1 aus den Querschlitzen 2 heraus, sodass eine mit Elastomer 4 geschlossene Außenmantelfläche und Innenmantelfläche gebildet wird. Wie in den Figuren 2 und 4 erkennbar, weist der Grundkörper 1 in dem mit Querschlitzen 2 versehenen Bereich einen größeren Innendurchmesser und einen kleineren Außendurchmesser als die anschließenden ungeschlitzten Abschnitte 1 b, 1 c auf. Bei der Herstellung werden an dem Grundkörper 1 entsprechende Ringnuten 6a, 6b gebildet (siehe Fig. 2). Es kann damit aus dem Elastomer 4 ein innig mit den Querschlitzen 2 verbundener Elastomerkörper gebildet werden, der bündig an die ungeschlitzten Bereiche, das heißt einen der Anschlussabschnitte 1b und den Zwischenabschnitt 1c anschließt. Durch die beschriebene Ausgestaltung ergibt sich eine ringzylindrische Form der Ausgleichskupplung, wobei lediglich in den beiden Anschlussabschnitten 1 b eine innenliegende Nut 5 zur Einlegung eines Spannrings vorgesehen ist.

## Patentansprüche

1. Ausgleichskupplung zur Übertragung von Drehmomenten mit einem sich in eine Längsrichtung (Z) erstreckenden, hülsenförmigen Grundkörper (1), welcher mehrere um den Umfang sowie entlang der Längsrichtung (Z) verteilte Querschlitze (2) aufweist, wobei die Querschlitze (2) sich jeweils in radialer Richtung von einer Außenfläche zu einer Innenfläche des hülsenförmigen Grundkörpers (1) erstrecken, wobei die Querschlitze (2) jeweils mit einem Elastomer (4) ausgefüllt sind, **dadurch gekennzeichnet, dass** der Grundkörper (1) in Längsrichtung (Z) hintereinander zumindest einen mit Querschlitzen (2) versehenen Bereich (1a) zwischen zwei ungeschlitzten Bereichen aufweist, wobei der mit den Querschlitzen (2) versehene Bereich (1a) einen größeren Innendurchmesser und/oder einen kleineren Außendurchmesser als die ungeschlitzten Bereiche aufweist.

2. Ausgleichskupplung nach Anspruch 1, **dadurch gekennzeichnet, dass** das Elastomer (4) an der Innenseite und/oder der Außenseite des Grundkörpers (1) aus den Querschlitzen (2) vorsteht und sich dort in axialer Richtung (Z) über den jeweils zugeordneten Querschlitz (2) hinaus erstreckt.

3. Ausgleichskupplung nach Anspruch 2, **dadurch gekennzeichnet, dass** an der Innenseite und/oder der Außenseite des Grundkörpers (1) eine mehrere Querschlitz (2) abdeckende Schicht aus Elastomer (4) vorhanden ist, welche mit dem Elastomer (4) in den Querschlitzen (2) einen zusammenhängenden Elastomerkörper bildet.

4. Ausgleichskupplung nach Anspruch 3, **dadurch gekennzeichnet, dass** der Elastomerkörper die zugeordneten Querschlitze (2) an der Innenseite und der Außenseite des Grundkörpers (1) abdeckt.

5. Ausgleichskupplung nach einem der Ansprüche 1 bis 4, **dadurch gekennzeichnet, dass** der Grundkörper (1) an dem mit den Querschlitzen (2) versehenen Bereich (1a) derart mit Elastomer (4) versehen ist, dass dort der Grundkörper (1) zusammen mit dem Elastomer (4) den gleichen Innendurchmesser und Außendurchmesser wie die angrenzenden ungeschlitzten Bereiche aufweist.

6. Ausgleichskupplung nach einem der Ansprüche 1 bis 5, **dadurch gekennzeichnet, dass** der Grundkörper (1) aus einem zusammenhängenden Metallstück gebildet ist.

7. Ausgleichskupplung nach einem der Ansprüche 1 bis 6, **dadurch gekennzeichnet, dass** die Querschlitze (2) kreisbogenförmige Einschnitte sind.

8. Ausgleichskupplung nach einem der Ansprüche 1 bis 7, **dadurch gekennzeichnet, dass** mehrere Querschnittsebenen mit jeweils zumindest zwei Querschlitzen (2) vorhanden sind, wobei die Querschlitze (2) einer ersten Gruppe von Querschnittsebenen gegenüber den Querschlitzen (2) einer zweiten Gruppe von Querschnittsebenen in Umfangrichtung gesehen versetzt angeordnet sind.

9. Ausgleichskupplung nach Anspruch 8, **dadurch gekennzeichnet, dass** die Querschnittsebenen jeweils drei gleichmäßig um den Umfang verteilte Querschlitze (2) aufweisen, wobei die Querschlitze (2) der ersten Gruppe gegenüber den Querschlitzen (2) der zweiten Gruppe in Umfangsrichtung um 60° versetzt angeordnet sind.

10. Ausgleichskupplung nach einem der Ansprüche 1 bis 9, **dadurch gekennzeichnet, dass** das Elastomer (4) eine Härte zwischen 70 Shore A und 95 Shore A aufweist.

11. Ausgleichskupplung nach einem der Ansprüche 1 bis 10, **dadurch gekennzeichnet, dass** das Elastomer (4) ein Polyurethan-Elastomer ist.

12. Verfahren zur Herstellung einer Ausgleichskupplung nach einem der Ansprüche 1 bis 11,
wobei ein Rohrabschnitt zugeführt wird,
wobei in den Rohrabschnitt zur Erzeugung des mehrfach geschlitzten Grundkörpers (1) die Querschlitze (2) eingebracht werden,
wobei an den Rohrenden Anschlussabschnitte (1 b) erzeugt werden, und
wobei die Querschlitze (2) mit einem Elastomer (4) ausgefüllt werden,
wobei an der Innenseite und/oder der Außenseite im Bereich mehrerer Querschlitze (2) eine Ringnut (6a, 6b) gebildet wird, die nachfolgend zusammen mit den Querschlitzen (2) mit Elastomer (4) ausgefüllt wird.

## Claims

1. A compensating coupling for transmitting torques, comprising a sleeve-shaped base body (1) extending in a longitudinal direction (Z) and having a plurality of transverse slots (2) distributed about the circumference and along the longitudinal direction (Z), wherein the transverse slots (2) each extend in the radial direction from an outer surface to an inner surface of the sleeve-shaped base body (1), wherein the transverse slots (2) are each filled with an elastomer (4), **characterized in that** the base body (1) has at least one region (1a) provided with transverse slots (2) between two regions without slots one after the other in the longitudinal direction (Z), wherein the region (1a) provided with the transverse slots (2) has a larger inside diameter and/or a smaller outside diameter than the regions without slots.

2. The compensating coupling according to claim 1, **characterized in that** the elastomer (4) projects out of the transverse slots (2) on the inside and/or outside of the base body (1) and extends there in the axial direction (Z) beyond the respective associated transverse slot (2).

3. The compensating coupling according to claim 2, **characterized in that** a layer of elastomer (4) which covers a plurality of transverse slots (2) and, together with the elastomer (4) in the transverse slots (2) forms a cohesive elastomer body, is provided on the inside and/or outside of the base body (1).

4. The compensating coupling according to claim 3, **characterized in that** the elastomer body covers the associated transverse slots (2) on the inside and the outside of the base body (1).

5. The compensating coupling according to any one of claims 1 to 4, **characterized in that** in the region (1a) provided with the transverse slots (2), the base body (1) is provided with elastomer (4) in such a manner that there the base body (1) together with the elastomer (4) has the same inside diameter and outside diameter as the adjacent region without slots.

6. The compensating coupling according to any one of claims 1 to 5, **characterized in that** the base body (1) is formed as an integral piece of metal.

7. The compensating coupling according to any one of claims 1 to 6, **characterized in that** the transverse slots (2) are circular arc-shaped recesses.

8. The compensating coupling according to any one of claims 1 to 7, **characterized in that** a plurality of cross-sectional planes, each having at least two transverse slots (2), are provided, wherein the transverse slots (2) of a first group of cross-sectional planes, as seen in the circumferential direction, are arranged offset with respect to the transverse slots (2) of a second group of cross-sectional planes.

9. The compensating coupling according to claim 8, **characterized in that** the cross-sectional planes each have three transverse slots (2) distributed uniformly about the circumference, wherein the transverse slots (2) of the first group are offset in the circumferential direction by 60° with respect to the transverse slots (2) of the second group.

10. The compensating coupling according to any of claims 1 to 9, **characterized in that** the elastomer (4) has a hardness between 70 Shore A and 95 Shore A.

11. The compensating coupling according to any of claims 1 to 10, **characterized in that** the elastomer (4) is a polyurethane elastomer.

12. A method for producing a compensating coupling according to any one of claims 1 to 11,
wherein a tube section is supplied,
wherein the transverse slots (2) are formed in the tube section to generate the multi-slotted base body (1),
wherein connecting sections (1b) are generated at the tube ends, and
wherein the transverse slots (2) are filled with an elastomer (4),
wherein an annular groove (6a, 6b) which, together with the transverse slots (2) is subsequently filled with elastomer (4), is formed on the inside and/or the outside in the region of a plurality of the transverse slots (2).

## Revendications

1. Accouplement de compensation pour la transmission de couples avec un corps de base (1) en forme de manchon, s'étendant dans le sens longitudinal (Z), lequel comporte plusieurs fentes transversales (2) réparties sur la périphérie ainsi que le long de la direction longitudinale (Z), pour lequel les fentes transversales (2) s'étendent respectivement dans la direction radiale d'une surface extérieure vers une surface intérieure du corps de base (1) en forme de manchon, pour lequel les fentes transversales (2) sont respectivement remplies d'un élastomère (4), **caractérisé en ce que** le corps de base (1) comporte dans la direction longitudinale (Z) au moins une zone (1a) dotée de fentes transversales (2) l'une derrière l'autre entre deux zones non fendues, pour lequel la zone (1a) dotée de fentes transversales (2) comporte un diamètre intérieur plus grand et/ou un diamètre extérieur plus petit que les zones non fendues.

2. Accouplement de compensation selon la revendication 1 **caractérisé en ce que** l'élastomère (4) dépasse des fentes transversales (2) sur le côté intérieur et/ou le côté extérieur du corps de base (1) et s'y étend en dehors dans la direction axiale (Z) sur les fentes transversales (2) respectivement attribuée.

3. Accouplement de compensation selon la revendication 2 **caractérisé en ce que** sur le côté intérieur et/ou le côté extérieur du corps de base (1), il y a une couche d'élastomère (4) recouvrant plusieurs fentes transversales (2), qui forme avec l'élastomère (4) dans les fentes transversales (2), un corps d'élastomère cohérent.

4. Accouplement de compensation selon la revendication 3 **caractérisé en ce que** le corps d'élastomère recouvre les fentes transversales (2) attribuées sur le côté intérieur et le côté extérieur du corps de base (1).

5. Accouplement de compensation selon l'une quelconque des revendications 1 à 4 **caractérisé en ce que** le corps de base (1) est muni d'élastomère (4) sur la zone (1a) dotée de fentes transversales (2) de telle manière que le corps de base (1) comporte à cet endroit avec l'élastomère (4) le même diamètre intérieur et diamètre extérieur que les zones non fendues limitrophes.

6. Accouplement de compensation selon l'une quelconque des revendications 1 à 5 **caractérisé en ce que** le corps de base (1) est formé d'une pièce métallique cohérente.

7. Accouplement de compensation selon l'une quelconque des revendications 1 à 6 **caractérisé en ce que** les fentes transversales (2) sont des entailles en forme d'arc de cercle.

8. Accouplement de compensation selon l'une quelconque des revendications 1 à 7 **caractérisé en ce qu'**il y a plusieurs plans de fentes transversales avec respectivement au moins deux fentes transversales (2), pour lequel les fentes transversales (2) d'un premier groupe de plans de fentes transversales par rapport aux fentes transversales (2) d'un deuxième groupe de plans de fentes transversales sont disposées décalées, vues dans le sens périphérique.

9. Accouplement de compensation selon la revendication 8 **caractérisé en ce que** les plans de fentes transversales comportent respectivement trois fentes transversales (2) réparties uniformément sur la périphérie, pour lequel les fentes transversales (2) du premier groupe par rapport aux fentes transversales (2) du deuxième groupe sont disposées décalées de 60° dans le sens périphérique.

10. Accouplement de compensation selon l'une quelconque des revendications 1 à 9 **caractérisé en ce que** l'élastomère (4) comporte une dureté entre 70 Shore A et 95 Shore A.

11. Accouplement de compensation selon l'une quelconque des revendications 1 à 10 **caractérisé en ce que** l'élastomère (4) est un élastomère de polyuréthane.

12. Procédé pour la fabrication d'un accouplement de compensation selon l'une quelconque des revendications 1 à 11
pour lequel on fait entrer une section de tube,
pour lequel les fentes transversales (2) sont agencées dans la section de tube pour produire le corps de base (1) à fentes multiples
pour lequel des sections de raccord (1b) sont produites aux extrémités de tube, et
pour lequel les fentes transversales (2) sont remplies d'élastomère (4),
pour lequel une rainure annulaire (6a, 6b) est formée sur le côté intérieur et/ou le côté extérieur dans la zone de plusieurs fentes transversales (2), qui est remplie ultérieurement d'élastomère (4) en même temps que les fentes transversales (2).
